# EUROPEAN PATENT APPLICATION

(11) **EP 4 366 372 A1**
(43) Date of publication of application: **08.05.2024**
(21) Application number: 23206878.3
(22) Date of filing: 31.10.2023
(51) Int. Cl.: H04W 28/02

(54) **METHOD AND USER EQUIPMENT FOR REPORTING REMAINING DELAY BUDGET INFORMATION**

(30) Priority: 03.11.2022 US 202263422009 P; 27.10.2023 US 202318495780
(71) Applicant: Industrial Technology Research Institute, Chutung, Hsinchu 310401 (TW)
(72) Inventor: Chiu, Chun-Yuan, Pingtung City (TW); Tsai, Tzu-Jane, Zhubei City (TW); Ren, Fang-Ching, Hsinchu City (TW)
(74) Representative: Kurig, Thomas

(57) **Abstract**

A method and a user equipment for reporting a remaining delay budget information are provided. The method includes: receiving a radio resource control configuration, wherein the radio resource control configuration indicates the user equipment to report the remaining delay budget information of a logical channel or a logical channel group through a status report message (S161); determining whether a triggering condition is met, wherein the triggering condition is associated with a threshold of remaining delay budget (S162); and in response to the triggering condition being met, transmitting the status report message including the remaining delay budget information, wherein the remaining delay budget information indicates at least one remaining delay budget and at least one associated buffer size (S163).

## Description

### BACKGROUND

### Technical Field

The disclosure is related to a method and a user equipment (UE) for reporting a remaining delay budget information.

### Description of Related Art

The extended reality (XR) technology is becoming more and more popular. Comparing with the traditional new radio (NR) uplink (UL) scheduling, more information is required by the base station (e.g., gNB) to perform UL grant allocation between UEs, so as to support protocol data unit (PDU) based quality of service (QoS) handling for XR service. Accordingly, a finer granularity manner for providing XR buffer status is required.

### SUMMARY

The disclosure is directed to a method and a UE for reporting a remaining delay budget information.

A method for reporting a remaining delay budget information, adapted to a user equipment, wherein the method including: receiving a radio resource control configuration, wherein the radio resource control configuration indicates the user equipment to report the remaining delay budget information of a logical channel or a logical channel group through a status report message; determining whether a triggering condition is met, wherein the triggering condition is associated with a threshold of remaining delay budget; and in response to the triggering condition being met, transmitting the status report message including the remaining delay budget information, wherein the remaining delay budget information indicates at least one remaining delay budget and at least one associated buffer size.

In one embodiment of the present disclosure, the determining whether a triggering condition is met including: a remaining delay budget is below or equal to the threshold of remaining delay budget.

In one embodiment of the present disclosure, the triggering condition is further associated with at least one of the following: a period aligns with an extended reality frame rate; an arrival of extended reality traffic; a starting of on-duration; an arrival of first traffic of a protocol data unit set; an arrival of last traffic of a protocol data unit set; a threshold of inter-arrival time of arrived traffic; a discard of protocol data unit of extended reality traffic; a starting of an extended reality service; or a stopping of an extended reality service.

In one embodiment of the present disclosure, at least one of the threshold of remaining delay budget, the period aligns with an extended reality frame rate, or the threshold of inter-arrival time of arrived traffic is configured by the radio resource control configuration.

In one embodiment of the present disclosure, the radio resource control configuration further indicates at least one of the following: the logical channel, a buffer size table for setting a buffer size field in the status report message; or a media access control element format of the status report message.

In one embodiment of the present disclosure, the status report message indicates a type of protocol data unit set corresponding to the at least one remaining delay budget.

In one embodiment of the present disclosure, the remaining delay budget information indicates a bitmap of delay field corresponding to the at least one remaining delay budget and a plurality of buffer size fields corresponding to the at least one associated buffer size, wherein a bit of the bitmap of the delay field indicates one of the plurality of buffer size fields is available.

In one embodiment of the present disclosure, the status report message indicates a logical channel group identifier field.

In one embodiment of the present disclosure, the status report message indicates a bitmap field corresponding to a plurality of logical channel group identifiers, wherein a bit of the bitmap field indicates one of the plurality of logical channel group identifiers is available.

In one embodiment of the present disclosure, the status report message includes the remaining delay budget information for each available logical channel group identifier.

In one embodiment of the present disclosure, the status report message indicates a ratio by a ratio field, the ratio and the at least one associated buffer size indicate amount of data corresponding to the at least one remaining delay budget, and the ratio field has a mapping relationship with the at least one remaining delay budget.

In one embodiment of the present disclosure, the status report message includes a plurality of buffer size fields and a logical channel group identifier field, wherein the logical channel group identifier field indicates one of the plurality of buffer size fields is available.

In one embodiment of the present disclosure, the status report message includes a logical channel group identifier field, wherein the logical channel group identifier field indicates the ratio field is available, wherein a logical channel group corresponding to the logical channel identifier field is configured for an extended reality service.

In one embodiment of the present disclosure, the triggering condition is further associated with at least one of the following: a period aligns with an extended reality frame rate; an arrival of extended reality traffic; a starting of on-duration; an arrival of first traffic of a protocol data unit set; an arrival of last traffic of a protocol data unit set; a threshold of inter-arrival time of arrived traffic; a discard of protocol data unit of extended reality traffic; a starting of an extended reality service; or a stopping of an extended reality service.

In one embodiment of the present disclosure, at least one of the period aligns with an extended reality frame rate, the threshold of remaining delay budget, or the threshold of inter-arrival time of arrived traffic is configured by the radio resource control configuration.

In one embodiment of the present disclosure, the radio resource control configuration further indicates at least one of the following: a number of delay value combinations to be reported by the status report message; a number of type of protocol data unit set combination to be reported by the status report message; a number of bits used by a ratio field in the status report message; a logical channel group configured for extended reality traffic; a buffer size table for setting a buffer size field in the status report message; or a ratio table for setting a ratio field in the status report message.

In one embodiment of the present disclosure, the status report message includes a plurality of buffer size fields, a plurality of delay fields, and a logical channel group identifier field corresponding to the at least one remaining delay budget.

In one embodiment of the present disclosure, the logical channel group identifier field indicate one of the plurality of buffer size fields and one of the plurality of delay fields are available.

In one embodiment of the present disclosure, the threshold of remaining delay budget is configured by the radio resource control configuration.

A user equipment, including a transceiver and a processor. The processor is coupled to the transceiver and configured to: receive, via the transceiver, a radio resource control configuration, wherein the radio resource control configuration indicates the user equipment to report remaining delay budget information of a logical channel or a logical channel group through a status report message; determine whether a triggering condition is met, wherein the triggering condition is associated with a threshold of remaining delay budget; and in response to the triggering condition being met, transmit, via the transceiver, the status report message including the remaining delay budget information, wherein the remaining delay budget information indicates at least one remaining delay budget and at least one associated buffer size.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a schematic diagram of schedulers according to an embodiment of the present disclosure.
FIG. 2 illustrates a schematic diagram of BSR according to an embodiment of the present disclosure.
FIG. 3 illustrates a schematic diagram of transmission between the UE and the gNB according to an embodiment of the present disclosure.
FIG. 4 illustrates a schematic diagram of a model of downlink XR traffic according to an embodiment of the present disclosure.
FIG. 5 illustrates a schematic diagram of a plurality of PDUs according to an embodiment of the present disclosure.
FIG. 6 illustrates a schematic diagram of buffer status according to an embodiment of the present disclosure.
FIG. 7 illustrates a schematic diagram of reporting of buffer status according to an embodiment of present disclosure.
FIG. 8 illustrates a schematic diagram of a new MAC CE format of BSR according to an embodiment of the present disclosure.
FIG. 9 illustrates a schematic diagram of a new MAC CE format of BSR according to an embodiment of the present disclosure.
FIG. 10 illustrates a schematic diagram of a new MAC CE format of BSR according to an embodiment of the present disclosure.
FIG. 11 illustrates a schematic diagram of a new MAC CE format of BSR according to an embodiment of the present disclosure.
FIG. 12 illustrates a schematic diagram of a new MAC CE format of BSR according to an embodiment of the present disclosure.
FIG. 13 illustrates a schematic diagram of reporting of buffer status according to an embodiment of present disclosure.
FIG. 14 illustrates a schematic diagram of multiple new MAC CE formats for BSR according to an embodiment of the present disclosure.
FIG. 15 illustrates a schematic diagram of multiple new MAC CE formats for BSR according to an embodiment of the present disclosure.
FIG. 16 illustrates a flowchart of a method for reporting a remaining delay budget information according to an embodiment of the present disclosure.
FIG. 17 illustrates a schematic diagram of a UE according to an embodiment of the present disclosure.

### DESCRIPTION OF THE EMBODIMENTS

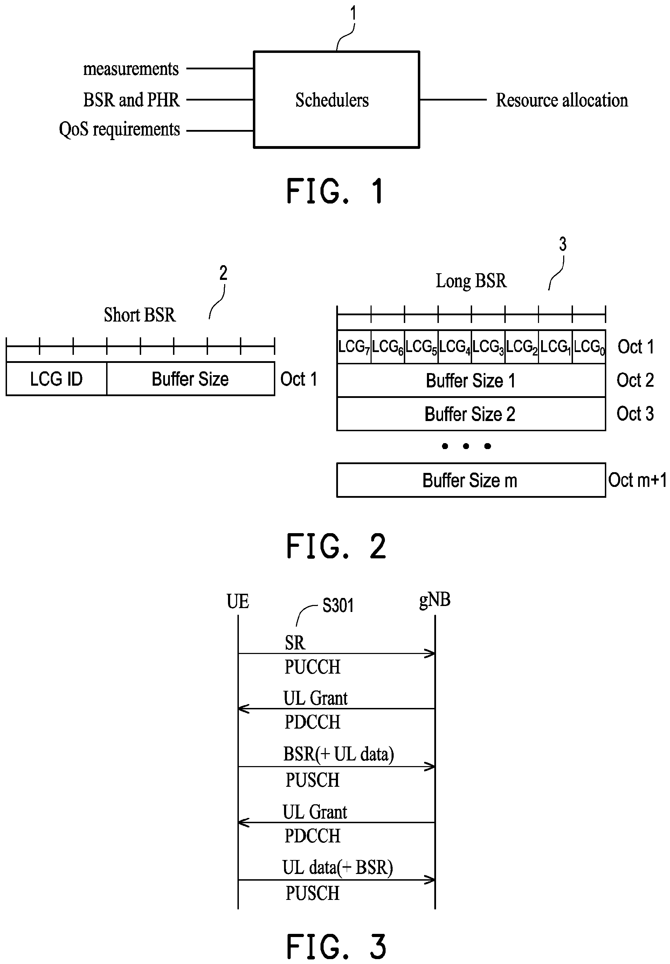

In order to utilize radio resources efficiently, media access control (MAC) in the base station (BS) may include dynamic resource schedulers that allocate physical layer resources for the downlink (DL) and the uplink (UL), as schedulers 1 shown in FIG. 1. The schedulers 1 may assign resources between UEs based on: radio conditions at the UE identified through measurements; UL buffer status report (BSR) and power headroom report (PHR); or QoS requirements of each UE and associated radio bearers. The BSR in the disclosure may also be referred to as a status report message.

The BSR procedure is used to provide the serving gNB with information about UL data volume in the MAC entity, wherein the BSR may include a short BSR 2 or a long BSR 3 as shown in FIG. 2. The short BSR 2 may include a Logical Channel Group Identifier (LCG ID) field and a Buffer Size field. The long BSR 3 may include a plurality of LCG ID fields and a plurality of Buffer Size fields respectively corresponding to the plurality of LCG ID fields. Each logical channel (LCH) may be allocated to an LCG. When a BSR is triggered (e.g., when new data arrives in the transmission buffers of the UE), a scheduling request (SR) may be transmitted by the UE (e.g., when no resources are available to transmit the BSR), as step S301 shown in FIG. 3

The SR is used for requesting uplink shared channel (UL-SCH) resources for new transmission. The MAC entity may be configured with zero, one, or more SR configurations. An SR configuration consists of a set of physical uplink control channel (PUCCH) resources for SR across different bandwidth parts (BWPs) and cells. Each SR configuration corresponds to one or more LCHs, corresponds to SCell beam failure recovery, corresponding to consistent listen before talk (LBT) failure recovery, or corresponding to beam failure recovery of beam failure detection reference signal (BFD-RS) set.

Uplink grant is either received dynamically on the physical downlink control channel (PDCCH), in a random access response, configured semi-persistently by radio resource control (RRC), or determined to be associated with the physical uplink shared channel (PUSCH) resource of MsgA as specified in clause 5.1.2a of technical specification (TS) 38.321 of 3GPP.

XR traffic characteristics may include: stringent latency requirement; high data rate; varying video frame size over time; or quasi-periodic packet arrival with application jitter. Table 1 is an example of XR traffic.

**Table 1**

| Use cases | DL bitrates (Mbps) | UL bitrates (Mbps) | One-way latency (ms) | Frame reliability (%) |
|---|---|---|---|---|
| Cloud gaming | 8-30 | -0.3 | 10-30 | ≥ 99 |
| Virtual reality (VR) | 30-100 | <2 | 5-20 | ≥ 99 |
| Augmented reality (AR) | 2-60 | 2-20 | 5-50 | ≥ 99 |

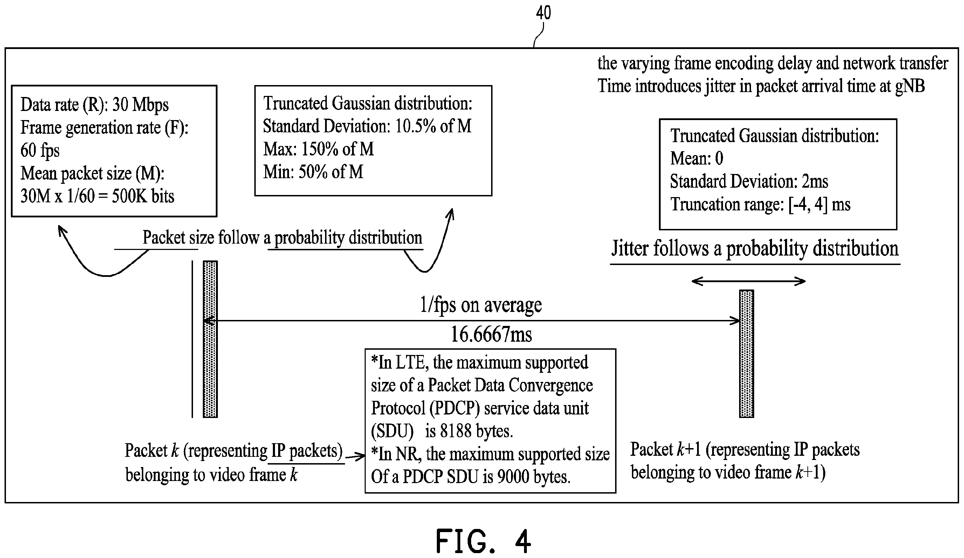

FIG. 4 illustrates a schematic diagram of a model 40 of downlink XR traffic (i.e., downlink VR traffic) according to an embodiment of the present disclosure. An uplink AR traffic may have similar characteristics with the downlink XR traffic.

According to RAN2 #119-e agreements (2022.8.26), RAN2 assumes that PDU Set based parameters and PDU Set related information may be used for better support of XR services. RAN2 can consider both UL and DL directions.

According to RAN2 #119bis-e agreements (2022.10.19), from RAN2 viewpoint, the following information would be useful for PDU set handling in UL and DL: Semi-static information (from core network (CN) to radio access network (RAN)): at least PDU-Set Error Rate (PSER) and PDU-Set Delay Budget (PSDB); or Dynamic information: at least identifying which PDU belongs to which data burst/PDU set is also needed, including means to determine at least PDU set boundaries.

PDU Set definition (TR 38.835): a PDU Set is composed of one or more PDUs carrying the payload of one unit of information generated at the application level (e.g. a frame or video slice for XR and media (XRM) Services, as used in TR 26.926). In some implementations all PDUs in a PDU Set are needed by the application layer to use the corresponding unit of information. In other implementations, the application layer can still recover parts all or of the information unit, when some PDUs are missing.

Data Burst definition (TR 38.835): data produced by the application in a short period of time, comprising PDUs from one or more PDU Sets.

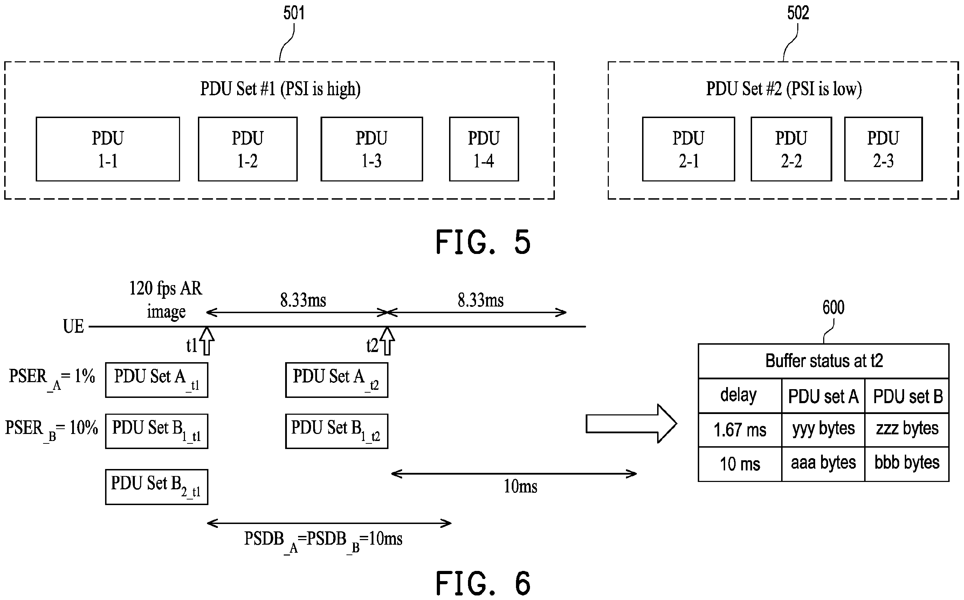

PDU Set Information and Identification (refer to TR 38.835 v18.0.1, 2023.4) may include: PDU Set Sequence Number; PDU Set Size in bytes; PDU Sequence Number (SN) within a PDU Set; Indication of End PDU of the PDU Set; or PDU Set Importance (PSI), wherein PSI identifies the relative importance of a PDU Set compared to other PDU Sets within a QoS Flow. RAN may use PSI for PDU Set level packet discarding in presence of congestion. FIG. 5 illustrates a schematic diagram of a plurality of PDUs according to an embodiment of the present disclosure. PDU 1-1, PDU 1-2, PDU 1-3, and PDU 1-4 may belong to PDU Set #1 (i.e., PDU Set 501) with higher PSI. PDU 2-1, PDU 2-2, and PDU 2-3 may belong to PDU Set #2 (i.e., PDU Set 502) with lower PSI.

Comparing with the traditional NR UL scheduling, more information is required by the base station (e.g., gNB) to perform UL grant allocation between UEs, so as to support PDU-based QoS handling for XR service. For example, for PSER control, gNB should know how much data is buffered (for specific delay value/type of PDU set) in each UE.

FIG. 6 illustrates a schematic diagram of buffer status according to an embodiment of the present disclosure. It is assumed that an AR video with 120fps is transmitted via PDU Set A, PDU Set B₁, and PDU Set B₂, and the delay budget of PDU Set A (i.e., PSDB__{A}) is equal to the delay budget of PDU Set B₁ and PDU Set B₂ (i.e., PSDB__{B}). Since PDU Set A is more important than PDU Set B₁ and PDU Set B₂, the PDU Set A is configured with a lower PSER (i.e., PSER__{A}) and the PDU Set B₁ and PDU Set B₂ are configured with a higher PSER (i.e., PSER__{B}).

At time t1, PDU Set A_{_t1}, PDU Set B_{1_t1}, and PDU Set B_{2_t1} are arrived to the UE. The remaining delay budgets of PDU Set A_{_t1}, PDU Set Biti, and PDU Set B_{2_t1} are 10ms. Accordingly, the UE may report the buffer status of data buffered in the UE, wherein the buffered data corresponds to a remaining delay budget of 10ms. At time t2, PDU Set A_{_}t₂, PDU Set B_{1_t2} are arrived to the UE. The remaining delay budgets of PDU Set A_{_t1}, PDU Set B_{1_t1}, and PDU Set B_{2_t1} are 1.67ms and the remaining delay budges of PDU Set A_{_t2}, PDU Set B_{1_t2} are 10ms. Accordingly, the UE may report the buffer status of data buffered in the UE, wherein the buffered data corresponding to a remaining delay budget of 10ms and a remaining delay budget of 1.67ms, as shown in table 600, wherein "yyy" denotes amount of remaining buffered data corresponding to PDU Set A_{_t1}, "aaa" denotes amount of remaining buffered data corresponding to PDU Set A_{_t2}, "zzz" denotes amount of remaining buffered data corresponding to PDU Set B_{1_t1} and PDU Set B_{2_t1}, and "bbb" denotes amount of remaining buffered data corresponding to PDU Set B_{1_t2}.

The disclosure provides a method for transmitting a remaining delay budget information of XR traffic. The method may also be applied for buffer status report of time-sensitive UL video traffic. The term "XR" can be replaced by the term "time-sensitive LTL video" in the disclosure.

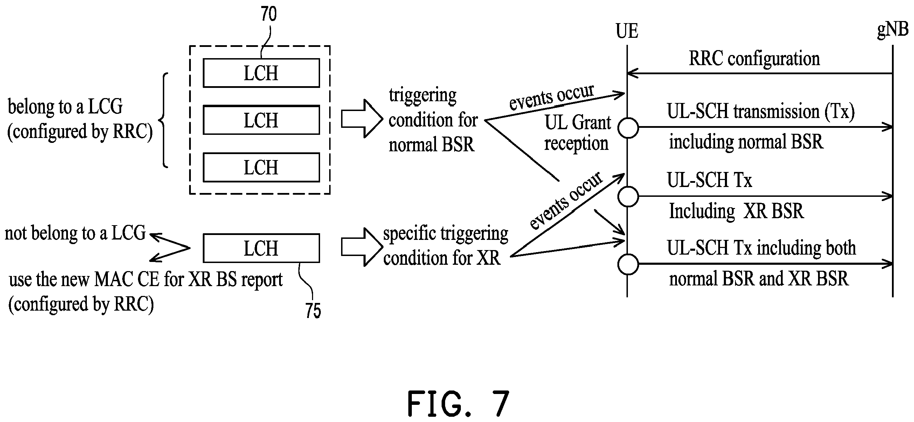

A UE may provide a new MAC control element (CE) to a base station, wherein the new MAC CE may carry XR buffer status independently from a normal buffer status report. FIG. 7 illustrates a schematic diagram of reporting of buffer status according to an embodiment of present disclosure. The UE may receive an RRC configuration indicating one or more specific LCHs (or LCGs) from the base station (e.g., gNB), wherein the RRC configuration may indicate the UE to report remaining delay budget information such as one or more remaining delay budgets of one or more LCHs (or LCGs) through BSR. The UE may transmit a BSR to the gNB according to the RRC configuration, wherein the BSR may indicate one or more remaining delay budgets and one or more associated buffer sizes. For an LCH belongs to a specific logical channel group (LCG) such as the LCH 70, the UE may transmit (via UL-SCH) a normal BSR of the LCH 70 to the gNB when a triggering condition for normal BSR is met, wherein the normal BSR may be carried by an original MAC CE. For an LCH not belongs to any LCG such as the LCH 75, the UE may transmit (via a UL-SCH) a XR BSR of the LCH 75 to the gNB when a specific triggering condition for XR service is met, wherein the XR BSR may be carried by a new MAC CE.

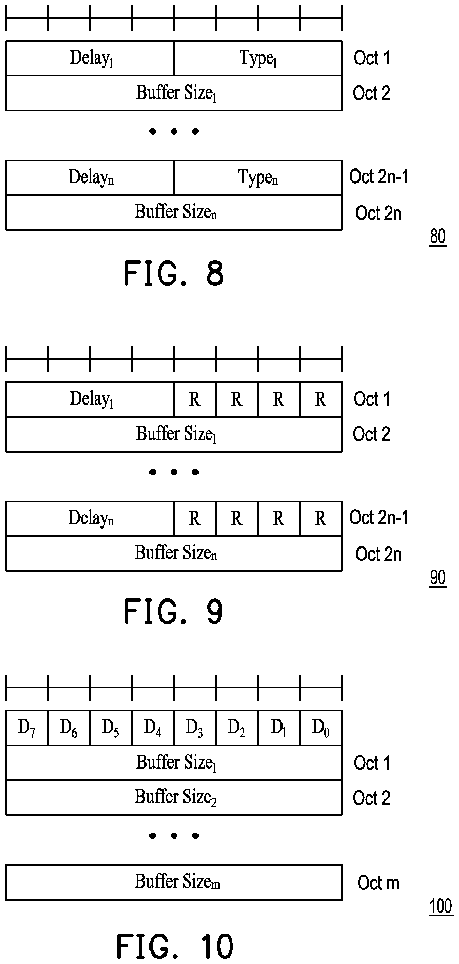

A UE may provide XR buffer status per delay value (i.e., per remaining delay budget) and per type of PDU Set. FIG. 8 illustrates a schematic diagram of a new MAC CE format of BSR according to an embodiment of the present disclosure. MAC CE 80 may include one or more Delayᵢ fields, Type; fields, and Buffer Size; fields, wherein "i" (i = 1, 2, ..., n, wherein n is a positive integer) denotes an index of field combination of MAC CE 80. The Delay field, Type field, and Buffer Size field with the same index correspond to each other. The Delay field (e.g., 4 bits) may identify the remaining delay budget of the buffered data in the UE, wherein the buffer status of the buffered data is reported while the MAC PDU (i.e., MAC PDU including the buffered data) is transmitted on UL-SCH. The Type field (e.g., 4 bits) may identify the type of PDU set of the buffered data, wherein the buffer status of the buffered data is reported, and the type may represent a level of importance of the buffered data (or PDU set). The Buffer Size field (e.g., 8 bits) may identify the total amount of data available with the associated delay (i.e., remaining delay budget) and type after the MAC PDU has been built.

A buffer size (BS) table may be used for setting the Buffer Size field of the BSR (e.g., MAC CE 80). The BS table may include a plurality of indices and a plurality of buffer size values respectively corresponding to the plurality of indices. In one embodiment, in order to reduce the quantisation errors, a new BS table rather than an original BS table may be used for configuring the Buffer Size field of the MAC CE 80., wherein the number of indices (or buffer size values) in the new BS table may be greater than the number of indices (of buffer size values) in the original BS table. Table 2 is an example of a 5-bit BS table and Table 3 is an example of an 8-bit BS table, wherein the BS value of the BS table may be designed by using an exponential function.

**Table 2**

| **Index** | **BS value** | **Index** | **BS value** | **Index** | **BS value** | **Index** | **BS value** |
|---|---|---|---|---|---|---|---|
| 0 | 0 | 8 | ≤ 102 | 16 | ≤ 1446 | 24 | ≤ 20516 |
| 1 | ≤ 10 | 9 | ≤ 142 | 17 | ≤ 2014 | 25 | ≤ 28581 |
| 2 | ≤ 14 | 10 | ≤ 198 | 18 | ≤ 2806 | 26 | ≤ 39818 |
| 3 | ≤ 20 | 11 | ≤ 276 | 19 | ≤ 3909 | 27 | ≤ 55474 |
| 4 | ≤ 28 | 12 | ≤ 384 | 20 | ≤ 5446 | 28 | ≤ 77284 |
| 5 | ≤ 38 | 13 | ≤ 535 | 21 | ≤ 7587 | 29 | ≤ 107669 |
| 6 | ≤ 53 | 14 | ≤ 745 | 22 | ≤ 10570 | 30 | ≤ 150000 |
| 7 | ≤ 74 | 15 | ≤ 1038 | 23 | ≤ 14726 | 31 | > 150000 |

**Table 3**

| **Index** | **BS value** | **Index** | **BS value** | **Index** | **BS value** | **Index** | **BS value** |
|---|---|---|---|---|---|---|---|
| 0 | 0 | 64 | ≤ 560 | 128 | ≤ 31342 | 192 | ≤ 1754595 |
| 1 | ≤ 10 | 65 | ≤ 597 | 129 | ≤ 33376 | 193 | ≤ 1868488 |
| 2 | ≤ 11 | 66 | ≤ 635 | 130 | ≤ 35543 | 194 | ≤ 1989774 |
| 3 | ≤ 12 | 67 | ≤ 677 | 131 | ≤ 37850 | 195 | ≤ 2118933 |
| 4 | ≤ 13 | 68 | ≤ 720 | 132 | ≤ 40307 | 196 | ≤ 2256475 |
| 5 | ≤ 14 | 69 | ≤ 767 | 133 | ≤ 42923 | 197 | ≤ 2402946 |
| 6 | ≤ 15 | 70 | ≤ 817 | 134 | ≤ 45709 | 198 | ≤ 2558924 |
| 7 | ≤ 16 | 71 | ≤ 870 | 135 | ≤ 48676 | 199 | ≤ 2725027 |
| 8 | ≤ 17 | 72 | ≤ 926 | 136 | ≤ 51836 | 200 | ≤ 2901912 |
| 9 | ≤ 18 | 73 | ≤ 987 | 137 | ≤ 55200 | 201 | ≤ 3090279 |
| 10 | ≤ 19 | 74 | ≤ 1051 | 138 | ≤ 58784 | 202 | ≤ 3290873 |
| 11 | ≤ 20 | 75 | ≤ 1119 | 139 | ≤ 62599 | 203 | ≤ 3504487 |
| 12 | ≤ 22 | 76 | ≤ 1191 | 140 | ≤ 66663 | 204 | ≤ 3731968 |
| ... | ... | ... | ... | ... | ... | ... | ... |
| 58 | ≤ 384 | 122 | ≤ 21491 | 186 | ≤ 1203085 | 250 | ≤ 67352729 |
| 59 | ≤ 409 | 123 | ≤ 22885 | 187 | ≤ 1281179 | 251 | ≤ 71724679 |
| 60 | ≤ 436 | 124 | ≤ 24371 | 188 | ≤ 1364342 | 252 | ≤ 76380419 |
| 61 | ≤ 464 | 125 | ≤ 25953 | 189 | ≤ 1452903 | 253 | ≤ 81338368 |
| 62 | ≤ 494 | 126 | ≤ 27638 | 190 | ≤ 1547213 | 254 | > 81338368 |
| 63 | ≤ 526 | 127 | ≤ 29431 | 191 | ≤ 1647644 | 255 | Reserved |

The size of MAC CE 80 may be varied and depend on positive integer "n". In one embodiment, MAC subheader format for the new MAC CE (e.g., MAC CE 80) may include a reserved field (i.e., "R" field), a "F" field, a logical channel identifier (LCID) field, an eLCID field, or a length field (i.e., "L" field). The reserved LCID value may be used for the new MAC CE.

The UE may determine whether a triggering condition is met, and may transmit the BSR to the base station if the triggering condition is met. The triggering condition may include a threshold of remaining delay budget, a period aligns with an XR frame rate, an arrival of XR traffic, a starting of on-duration, an arrival of first traffic of a PDU set, an arrival of last traffic of a PDU set, a threshold (or configured value) of inter-arrival time of arrived traffic, a discard of PDU of XR traffic, a starting of an XR service, or a stopping of an XR service. In one example, the UE may be triggered to transmit the BSR if a remaining delay budget of buffered data becomes less than or equal to the threshold of remaining delay budget. That is, if data corresponding to a remaining delay budget below to the threshold of remaining delay budget is received by the buffer of the UE, the UE may be triggered to transmit the BSR. In one example, the UE may be triggered to transmit the BSR if a traffic arrives with an inter-arrival time larger than the threshold (or configured value) of inter-arrival time of arrived traffic.

A base station may configure buffer status related information or triggering condition related information to a UE by an RRC configuration. In one embodiment, the RRC configuration may indicate the LCHs (or LCGs) configured to use the new MAC CE for XR BSR, the BS table for setting the buffer size field in the BSR, or the MAC CE format to be used. In one embodiment, the RRC configuration may indicate to the UE a periodicity (e.g., a period aligns with an XR frame rate), a threshold of remaining delay budget, or a threshold of inter-arrival time of arrived traffic.

A UE may transmit a BSR to a base statin through UL radio resources of the base station if the UL radio resources are available. The priority order of allocating resources in UL-SCH may be set as following: cell radio network temporary identifier (C-RNTI) MAC CE or data from an uplink common control channel (UL-CCCH); configured grant confirmation MAC CE, MAC CEs for Beam Failure Recovery (BFR) or multiple entry configured grant confirmation MAC CE; MAC CE for XR BSR; MAC CE for BSR, with exception of BSR included for padding; single entry PHR MAC CE or multiple entry PHR MAC CE; data from any logical channel, except data from UL-CCCH; and MAC CE for BSR included for padding.

A UE may provide XR buffer status per delay value. FIG. 9 illustrates a schematic diagram of a new MAC CE format of BSR according to an embodiment of the present disclosure. MAC CE 90 may include one or more Delayᵢ fields, Reserved fields (i.e., "R" fields), and Buffer Size; fields, wherein "i" (i = 1, 2, ..., n, wherein n is a positive integer) denotes an index of field combination of MAC CE 90. The Delay field and Buffer Size field with the same index correspond to each other. The Delay field (e.g., 4 bits) may identify the remaining delay budget of the buffered data in the UE, wherein the buffer status of the buffered data is reported while the MAC PDU (i.e., MAC PDU including the buffered data) is transmitted on UL-SCH. The Reserved field (if needed for byte alignment) may include a reserved bit set to 0. The Buffer Size field (e.g., 8 bits) may identify the total amount of data available with the associated delay (i.e., remaining delay budget) after the MAC PDU has been built. A new BS table may be used for MAC CE 90. The triggering condition corresponding to the MAC CE 90 may be similar to the triggering condition corresponding to the MAC CE 80, and the RRC configuration for the MAC CE 90 may be similar to the RRC configuration for the MAC CE 80.

FIG. 10 illustrates a schematic diagram of a new MAC CE format of BSR according to an embodiment of the present disclosure. MAC CE 100 may include a bitmap of the delay field corresponding to the at least one remaining delay budget and a plurality of buffer size fields corresponding to the at least one associated buffer size, wherein a bit of the bitmap of the delay field indicates one of the plurality of buffer size fields is available. One or more "Dᵢ" fields and Buffer Sizeⱼ fields, wherein "i" (a positive integer (e.g., from 0 to 7)) denotes an index of "D" field of MAC CE 100 and "j" (j=1, 2, ..., m, wherein m is a positive integer) denotes an index of Buffer Size field of MAC CE 100. The maximum value of index "j" may be less than or equal to the maximum value of index "i+1" (e.g., 8). The plurality of "Dᵢ" fields of MAC CE 100 may represent a bitmap of the delay field. The "Dᵢ" field (e.g., 1 bit) may have a mapping relationship with a specific remaining delay budget, and may indicate that the Buffer Sizeⱼ field corresponding to the "Dᵢ" field is available. After the base station receives the MAC CE 100 indicating a Buffer Size field in MAC CE 100 is available by the "Dᵢ" field, the base station may obtain a specific remaining delay budget of the "Dᵢ" field according to the mapping relationship between the specific remaining delay budget and the "D" field. The Buffer Size field (e.g., 8 bits) may identify the total amount of data available with the associated delay (e.g., remaining delay budget) after the MAC PDU has been built. The BSR may include the Buffer Size field indicated available by the "Dᵢ" field and may not include the Buffer Size field indicated not available by the "Dᵢ" field. A new BS table may be used for MAC CE 100. The triggering condition corresponding to the MAC CE 100 may be similar to the triggering condition corresponding to the MAC CE 80, and the RRC configuration for the MAC CE 100 may be similar to the RRC configuration for the MAC CE 80.

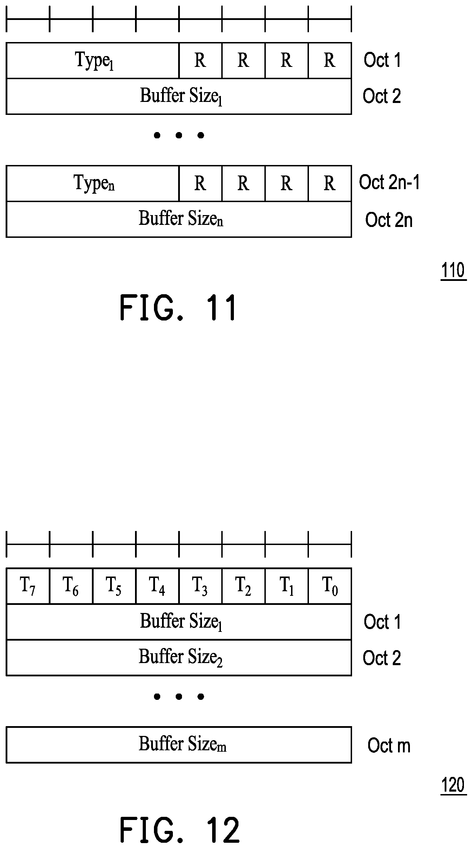

A UE may provide XR buffer status per type of PDU Set. FIG. 11 illustrates a schematic diagram of a new MAC CE format of BSR according to an embodiment of the present disclosure. MAC CE 110 may include one or more Type; fields, Reserved fields (i.e., "R" fields), and Buffer Size; fields, wherein "i" (i = 1, 2, ..., n, wherein n is a positive integer) denotes an index of field combination of MAC CE 110. The Type field (e.g., 4 bits) may identify the type of PDU set of the buffered data, wherein the buffer status of the buffered data is reported, and the type may represent a level of importance of the buffered data (or PDU set). The Reserved field (if needed for byte alignment) may include a reserved bit set to 0. The Buffer Size field (e.g., 8 bits) may identify the total amount of data available with the associated type after the MAC PDU has been built. A new BS table may be used for MAC CE 110. The triggering condition corresponding to the MAC CE 110 may be similar to the triggering condition corresponding to the MAC CE 80, and the RRC configuration for the MAC CE 110 may be similar to the RRC configuration for the MAC CE 80.

FIG. 12 illustrates a schematic diagram of a new MAC CE format of BSR according to an embodiment of the present disclosure. MAC CE 120 may include a bitmap of the Type field corresponding to the at least one type and a plurality of buffer size fields corresponding to the at least one associated buffer size, wherein a bit of the bitmap of the Type field indicates one of the plurality of buffer size fields is available. One or more "Tᵢ" fields and Buffer Sizeⱼ fields, wherein "i" (a positive integer (e.g., from 0 to 7)) denotes an index of "T" field of MAC CE 120, and "j" (j=1, 2, ..., m, wherein m is a positive integer) denotes an index of Buffer Size field of MAC CE 120. The maximum value of index "j" may be less than or equal to the maximum value of index "i+1" (e.g., 8). The plurality of "Tᵢ" fields of MAC CE 120 may represent a bitmap of the type field. The "Tᵢ" field may have a mapping relationship with a specific type of PDU Set, and may indicate that the Buffer Sizeⱼ field corresponding to the "Tᵢ" field is available. After the base station receives the MAC CE 120 indicating a Buffer Size field in MAC CE 120 is available by the "Tᵢ" field, the base station may obtain a specific type of PDU Set of the "Tᵢ" field according to the mapping relationship between the specific type of PDU Set and the "Tᵢ" field. The Buffer Size field (e.g., 8 bits) may identify the total amount of data available with the associated type after the MAC PDU has been built. The BSR may only include the Buffer Size field indicated available by the "Tᵢ" field. A new BS table may be used for MAC CE 120. The triggering condition corresponding to the MAC CE 120 may be similar to the triggering condition corresponding to the MAC CE 80, and the RRC configuration for the MAC CE 120 may be similar to the RRC configuration for the MAC CE 80.

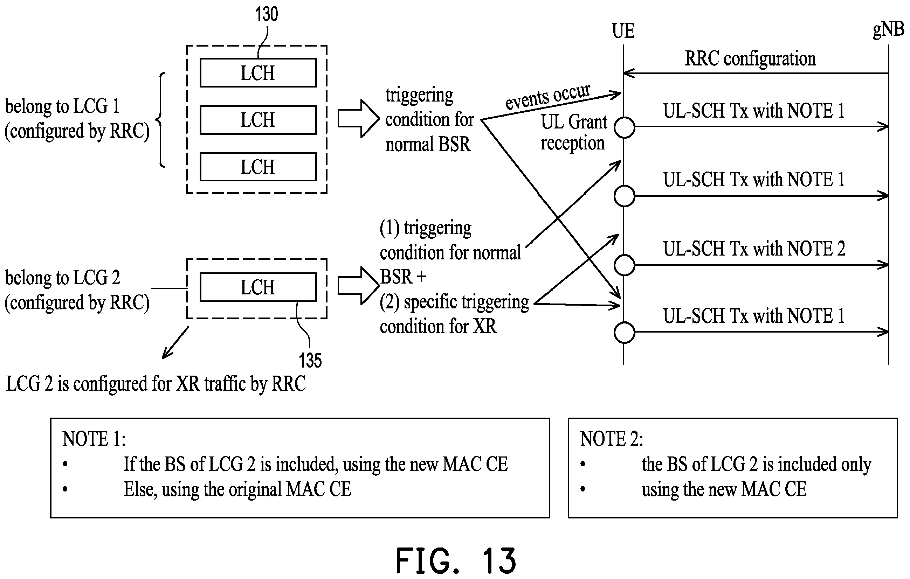

A UE may provide a new MAC CE for to a BS, wherein the new MAC CE may carry XR buffer status by leveraging normal BSR. FIG. 13 illustrates a schematic diagram of reporting of buffer status according to an embodiment of present disclosure. The UE may receive an RRC configuration indicating one or more specific LCHs (or LCGs) from the base station (e.g., gNB), wherein the RRC configuration may indicate the UE to report remaining delay budget information such as one or more remaining delay budgets of one or more LCHs (or LCGs) through BSR. The UE may transmit a BSR to the gNB according to the RRC configuration, wherein the BSR may indicate one or more remaining delay budgets and one or more associated buffer sizes. For an LCH belongs to LCG 1 such as LCH 130, the UE may transmit (via UL-SCH) a BSR of the LCH 130 to the gNB when a triggering condition for normal BSR is met, wherein the BSR may be carried by an original MAC CE. For an LCH belongs to LCG 2 (i.e., a LCG configured for XR traffic by RRC) such as LCH 135, the UE may transmit (via UL-SCH) a BSR of the LCH 135 to the gNB when a triggering condition for normal BSR and/or a specific triggering condition for XR service are met, wherein the BSR may be carried by a new MAC CE. In other words, a triggering condition for normal BSR may trigger the transmission of an original MAC CE or a new MAC CE and a specific triggering condition for XR service may only trigger the transmission of a new MAC CE.

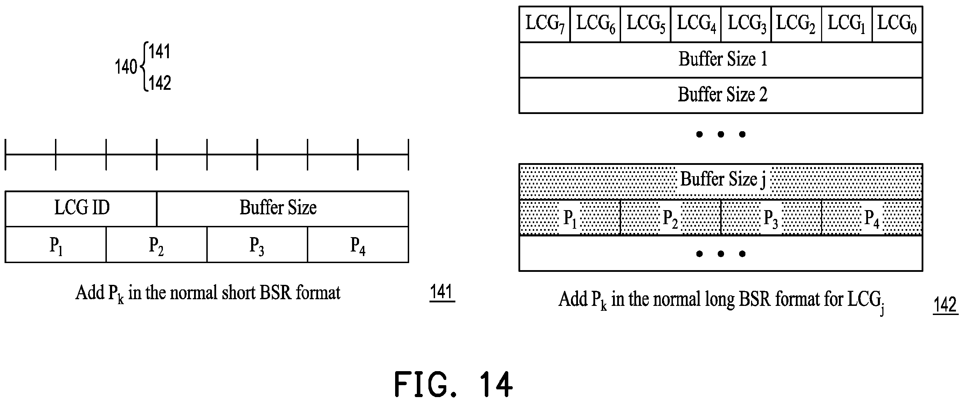

FIG. 14 illustrates a schematic diagram of multiple new MAC CE formats for BSR according to an embodiment of the present disclosure. MAC CE 140 may include a MAC CE 141 corresponding to a normal short BSR format with additional "Pₖ" field or a MAC CE 142 corresponding to a normal long BSR format with additional "Pₖ" field for LCGⱼ field.

MAC CE 141 may include an LCG ID field, a Buffer Size field, and one or more "Pₖ" fields (also referred to as ratio fields), wherein "k" (a positive integer) denotes an index of "P" field of MAC CE 141. The LCG ID field (e.g., 3 bits) may identify the group of one or more logical channels whose buffer status is been reported. The Buffer Size field (e.g., 5 bits) may identify the total amount of data available according to the data volume calculation procedure in TS 38.322 and TS 38.323 across all LCHs of an LCG after the MAC PDU has been built. A new BS table may be used for MAC CE 141. The "Pₖ" field (e.g., 2 bits) may have a mapping relationship with a specific remaining delay budget and/or type of PDU Set, and may identify a ratio between the total amount of data available with a preconfigured delay value (and/or type value) and the buffer size of the associated LCG, wherein the LCG is configured for XR traffic. After the base station receives the MAC CE 141, the base station may obtain amount of data corresponding to the specific remaining delay budget according to the "Pₖ" field and the Buffer Size field. For example, the base station may calculate the product of the value of the "Pₖ" field and the value of the Buffer Size field to obtain the amount of data corresponding to the specific remaining delay budget, wherein the specific remaining delay budget has a mapping relationship with the "Pₖ" field.

MAC CE 142 may include a bitmap of the LCG field corresponding to the at least one LCG and a plurality of buffer size fields corresponding to the at least one associated buffer size, wherein a bit of the bitmap of the LCG field indicates one of the plurality of buffer size fields is available. One or more LCGⱼ fields, Buffer Size; fields, and "Pₖ" fields, wherein "j" (a positive integer (e.g., from 0 to 7)) denotes an index of LCG ID field of MAC CE 142, "i" (a positive integer) denotes an index of Buffer Size field of MAC CE 142, and "k" (a positive integer) denotes an index of "P" field of MAC CE 142. The maximum value of index "i" or "k" may be less than or equal to the maximum value of index "j+1" (e.g., 8). The plurality of LCGⱼ fields of MAC CE 142 may represent a bitmap of the LCG ID field. The LCGⱼ field may have a mapping relationship with a specific timing delay budget, and/or may indicate that the Buffer Size; field corresponding to the LCGⱼ field is available, wherein the LCH or LCG corresponding to the LCGⱼ field is configured for XR service. After the base station receives the MAC CE 142 indicating a Buffer Size field in MAC CE 142 is available by the LCGⱼ field, the base station may obtain a specific remaining delay budget of the LCGⱼ field according to the mapping relationship between the specific remaining delay budget and the LCGⱼ field. The Buffer Size field (e.g., 8 bits) may identify the total amount of data available according to the data volume calculation procedure in TS 38.322 and TS 38.323 across all LCHs of an LCG after the MAC PDU has been built. The BSR may include the Buffer Size field indicated available by the LCGⱼ field and may not include the Buffer Size field indicated not available by the LCGⱼ field. A new BS table may be used for MAC CE 142. The "Pₖ" field (e.g., 2 bits) may have a mapping relationship with a specific remaining delay budget and/or type of PDU Set, and may identify a ratio between the total amount of data available with a preconfigured delay value and/or type value and the buffer size of the associated LCG, wherein the LCG is configured for XR traffic. After the base station receives the MAC CE 142, the base station may obtain amount of data corresponding to the specific remaining delay budget according to the "Pₖ" field and the Buffer Size field. For example, the base station may calculate the product of the value of the "Pₖ" field and the value of the Buffer Size field to obtain the amount of data corresponding to the specific remaining delay budget, wherein the specific remaining delay budget has a mapping relationship with the "Pₖ" field.

In one embodiment, the MAC subheader for fixed size MAC CE (i.e., subheader including "R" field, LCID field, or eLCID field) nay be used for MAC CE 141. The subheader for variable size MAC CE (i.e., subheader including "R" field, LCID field, and/or eLCID field, and "L" field) may be used for MAC CE 142. Two reserved LCID values of the MAC subheader may be used for MAC CE 141 or MAC CE 142.

The UE may determine whether a triggering condition is met, and may transmit the BSR to the base station if the triggering condition is met. The triggering condition may include triggering conditions for the normal BSR (e.g., normal BSR cancellation conditions) and XR specific triggering conditions. The XR specific triggering conditions may include a threshold of remaining delay budget, period aligns with an XR frame rate; an arrival of XR traffic; a starting of on-duration; an arrival of first traffic of a PDU set; an arrival of last traffic of a PDU set; a threshold (or a configured value) of inter-arrival time of arrived traffic; a discard of PDU of XR traffic; a starting of an XR service; or a stopping of an XR service. In one embodiment, the XR specific triggering conditions may only result in BSR of the LCG configured for XR traffic.

A base station may configure buffer status related information or triggering condition related information to a UE by an RRC configuration. In one embodiment, the RRC configuration may indicate the number of delay/type value combinations configured to be reported by the BSR, the number of bits used for the "Pₖ" field in the BSR, the delay/type value corresponding to the "Pₖ" field, the LCGs configured to use the new MAC CE for XR BSR, the BS table for setting the buffer size field in the BSR, or the ratio table for setting the "Pₖ" field in the BSR. In one embodiment, the RRC configuration may indicate to the UE a periodicity (e.g., a period aligns with an XR frame rate), a threshold of remaining delay budget, or a threshold of inter-arrival time of arrived traffic.

A UE may transmit a BSR to a base statin through UL radio resources of the base station if the UL radio resources are available. The priority order of allocating resources in UL-SCH may be set as following: C-RNTI MAC CE or data from an UL-CCCH; configured grant confirmation MAC CE, MAC CEs for BFR, or multiple entry configured grant confirmation MAC CE; MAC CE for BSR, with exception of BSR included for padding; single entry PHR MAC CE or multiple entry PHR MAC CE; data from any logical channel, except data from UL-CCCH; and MAC CE for BSR included for padding.

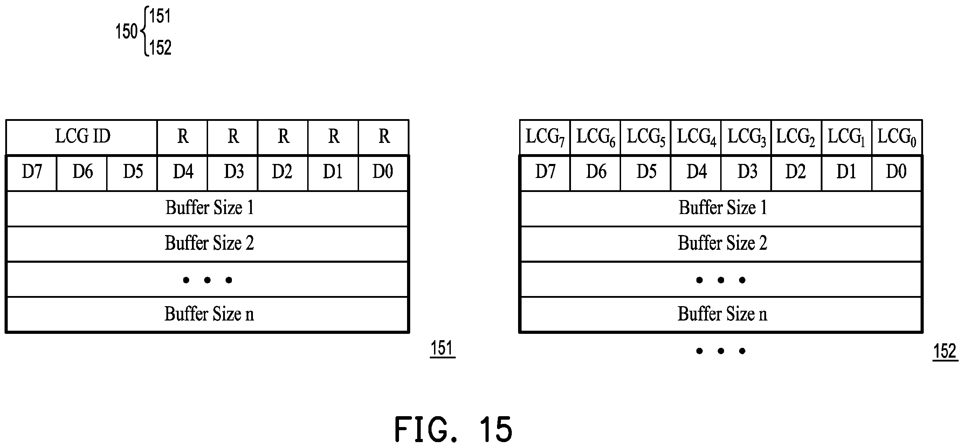

FIG. 15 illustrates a schematic diagram of multiple new MAC CE formats for BSR according to an embodiment of the present disclosure. MAC CE 150 may include a MAC CE 151 corresponding to a short XR BSR format or a MAC CE 152 corresponding to a long XR BSR format.

MAC CE 151 may include an LCG ID field, one or more Buffer Sizeⱼ field, and one or more "Dₖ" fields, wherein "j" (a positive integer) denotes an index of Buffer Size field of MAC CE 151, and "k" (a positive integer) denotes an index of "D" field of MAC CE 151. The LCG ID field (e.g., 3 bits) may identify the group of one or more logical channels whose buffer status is been reported. The "Dₖ" field (e.g., 1 bit) may have a mapping relationship with a specific remaining delay budget, and may indicate that the Buffer Sizeⱼ field corresponding to the "Dₖ" field is available. The Buffer Size field (e.g., 8 bits) may identify the total amount of data available according to the data volume calculation procedure in TS 38.322 and TS 38.323 across all LCHs of an LCG after the MAC PDU has been built. A new BS table may be used for MAC CE 151 or for the LCG configured for XR traffic. The triggering condition corresponding to the MAC CE 151 may be similar to the triggering condition corresponding to the MAC CE 140, and the RRC configuration for the MAC CE 151 may be similar to the RRC configuration for the MAC CE 140.

MAC CE 152 may include one or more LCGᵢ fields, Buffer Sizeₖ fields, and "Dⱼ" fields, wherein "i" (a positive integer) denotes an index of LCG ID field of MAC CE 152, "k" (a positive integer) denotes an index of Buffer Size field of MAC CE 152, and "j" (a positive integer (e.g., from 0 to 7)) denotes an index of "D" field of MAC CE 152. The maximum value of index "k" may be less than or equal to the maximum value of index "i+1" (e.g., 8). The plurality of LCGᵢ fields of MAC CE 152 may represent a bitmap of the LCG ID field. The plurality of "Dⱼ" fields of MAC CE 152 may represent a bitmap of the remaining delay budgets. The LCGᵢ field may indicate that the "D" field and the plurality of associated Buffer Sizeₖ field corresponding to the LCGᵢ field is available, wherein the LCH or LCG corresponding to the LCGᵢ field is configured for XR service. The "Dⱼ" field may have a mapping relationship with a specific timing delay budget and may indicate that the Buffer Sizeₖ field corresponding to the "Dⱼ" field is available, wherein the LCH or LCG corresponding to the LCGᵢ field is configured for XR service. After the base station receives the MAC CE 152 indicating a Buffer Size field in MAC CE 152 is available by the a LCGᵢ field and Dⱼ field, the base station may obtain a specific remaining delay budget corresponding to the Buffer Size field of the LCGᵢ field according to the mapping relationship between the specific remaining delay budget and the Dⱼ field. The Buffer Size field (e.g., 8 bits) may identify the total amount of data available according to the data volume calculation procedure in TS 38.322 and TS 38.323 across all LCHs of an LCG after the MAC PDU has been built. The XR BSR may include the Buffer Size field indicated available by the LCGᵢ field (or "Dⱼ" field) and may not include the Buffer Size field indicated not available by the LCGᵢ field (or "Dⱼ" field). A new BS table may be used for MAC CE 152. The triggering condition corresponding to the MAC CE 152 may be similar to the triggering condition corresponding to the MAC CE 140, and the RRC configuration for the MAC CE 152 may be similar to the RRC configuration for the MAC CE 140.

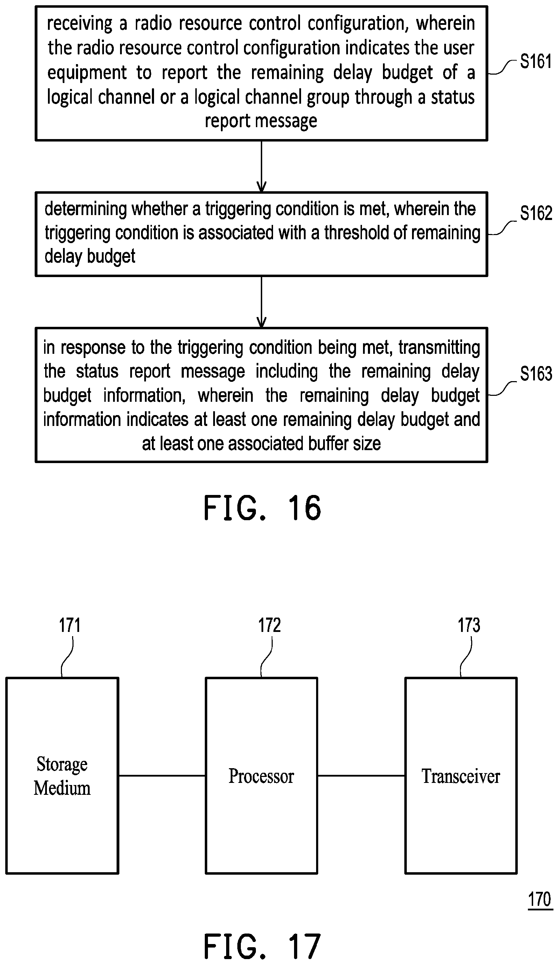

FIG. 16 illustrates a flowchart of a method for reporting a remaining delay budget information according to an embodiment of the present disclosure, wherein the method may be implemented by a UE. In step S161, receiving a radio resource control configuration, wherein the radio resource control configuration indicates the user equipment to report the remaining delay budget information of a logical channel or a logical channel group through a status report message. In step S162, determining whether a triggering condition is met, wherein the triggering condition is associated with a threshold of remaining delay budget. In step S163, in response to the triggering condition being met, transmitting the status report message including the remaining delay budget information, wherein the remaining delay budget information indicates at least one remaining delay budget and at least one associated buffer size.

FIG. 17 illustrates a schematic diagram of a UE 170 according to an embodiment of the present disclosure, wherein the method as shown in FIG. 1 to FIG. 16 may be implemented by the UE 170. The UE 170 may include a processor 172, a storage medium 171, and a transceiver 173. The processor 172 is coupled to the storage medium 171 and the transceiver 173 and is configured to access and execute a plurality of modules stored in the storage medium 171.

The processor 172 could be implemented by using programmable units such as a microprocessor, a micro-controller, a DSP chip, a field programmable gate array (FPGA), and so forth. The functions of the processor 172 may also implemented with separated electronic devices or ICs.

The storage medium 171 may be, for example, any type of fixed or removable random access memory (RAM), a read-only memory (ROM), a flash memory, a hard disk drive (HDD), a solid state drive (SSD) or similar element, or a combination thereof, configured to record a plurality of modules or various applications executable by the processor 172.

The transceiver 173 may be configured to transmit or receive signals. The transceiver 173 may also perform operations such as low noise amplifying, impedance matching, frequency mixing, up or down frequency conversion, filtering, amplifying, and so forth. The transceiver 173 may include one or more digital-to-analog (D/A) converters or analog-to-digital (A/D) converters which are configured to convert from an analog signal format to a digital signal format during uplink signal processing and from a digital signal format to an analog signal format during downlink signal processing.

In view of the aforementioned description, the UE of the present disclosure may provide XR buffer status to the base station in a finer granularity manner (e.g., per delay value or per type of PDU set). The possible use case of "per type of PDU set" may include: a frame may be encoded into multiple PDU sets which have different levels of importance (e.g., different PDU-set error rate (PSER) requirements). The possible use case of "per type of PDU set" may include: burst PDUs in different frames may be buffered at the same time (e.g., 120 frame per second (FPS) with PDU-set delay budget (PSDB) of 10ms).

## Claims

1. A method for reporting a remaining delay budget information, adapted to a user equipment (170), **characterised in that**, wherein the method comprising:
receiving a radio resource control configuration, wherein the radio resource control configuration indicates the user equipment (170) to report the remaining delay budget information of a logical channel (70, 75, 130, 135) or a logical channel group through a status report message (S161);
determining whether a triggering condition is met, wherein the triggering condition is associated with a threshold of remaining delay budget (S162), wherein the threshold of remaining delay budget is configured by the radio resource control configuration; and
in response to the triggering condition being met, transmitting the status report message including the remaining delay budget information, wherein the remaining delay budget information indicates at least one remaining delay budget and at least one associated buffer size (S163).

2. The method of claim 1, wherein the determining whether a triggering condition is met comprising:
a remaining delay budget is below or equal to the threshold of remaining delay budget.

3. The method of claim 1, wherein the triggering condition is further associated with at least one of the following:
a period aligns with an extended reality frame rate; an arrival of extended reality traffic; a starting of on-duration; an arrival of first traffic of a protocol data unit set; an arrival of last traffic of a protocol data unit set; a threshold of inter-arrival time of arrived traffic; a discard of protocol data unit of extended reality traffic; a starting of an extended reality service; or a stopping of an extended reality service, wherein at least one of the threshold of remaining delay budget, the period aligns with an extended reality frame rate, or the threshold of inter-arrival time of arrived traffic is configured by the radio resource control configuration.

4. The method of claim 1, wherein the radio resource control configuration further indicates at least one of the following:
the logical channel (70, 75, 130, 135), a buffer size table for setting a buffer size field in the status report message; or a media access control element format of the status report message.

5. The method of claim 1, wherein the status report message indicates a type of protocol data unit set corresponding to the at least one remaining delay budget.

6. The method of claim 1, wherein the remaining delay budget information indicates a bitmap of delay field corresponding to the at least one remaining delay budget and a plurality of buffer size fields corresponding to the at least one associated buffer size, wherein a bit of the bitmap of the delay field indicates one of the plurality of buffer size fields is available.

7. The method of claim 6, wherein the status report message indicates a logical channel group identifier field.

8. The method of claim 6, wherein the status report message indicates a bitmap field corresponding to a plurality of logical channel group identifiers, wherein a bit of the bitmap field indicates one of the plurality of logical channel group identifiers is available, wherein the status report message comprises the remaining delay budget information for each available logical channel group identifier.

9. The method of claim 1, wherein the status report message indicates a ratio by a ratio field, the ratio and the at least one associated buffer size indicate amount of data corresponding to the at least one remaining delay budget, and the ratio field has a mapping relationship with the at least one remaining delay budget.

10. The method of claim 9, wherein the status report message comprises a plurality of buffer size fields and a logical channel group identifier field, wherein the logical channel group identifier field indicates one of the plurality of buffer size fields is available.

11. The method of claim 9, wherein the status report message comprises a logical channel group identifier field, wherein the logical channel group identifier field indicates the ratio field is available, wherein a logical channel group corresponding to the logical channel identifier field is configured for an extended reality service.

12. The method of claim 9, wherein the triggering condition is further associated with at least one of the following:
a period aligns with an extended reality frame rate; an arrival of extended reality traffic; a starting of on-duration; an arrival of first traffic of a protocol data unit set; an arrival of last traffic of a protocol data unit set; a threshold of inter-arrival time of arrived traffic; a discard of protocol data unit of extended reality traffic; a starting of an extended reality service; or a stopping of an extended reality service, wherein at least one of the period aligns with an extended reality frame rate, the threshold of remaining delay budget, or the threshold of inter-arrival time of arrived traffic is configured by the radio resource control configuration.

13. The method of claim 9, wherein the radio resource control configuration further indicates at least one of the following:
a number of delay value combinations to be reported by the status report message; a number of type of protocol data unit set combination to be reported by the status report message; a number of bits used by a ratio field in the status report message; a logical channel group configured for extended reality traffic; a buffer size table for setting a buffer size field in the status report message; or a ratio table for setting a ratio field in the status report message.

14. The method of claim 1, wherein the status report message comprises a plurality of buffer size fields, a plurality of delay fields, and a logical channel identifier field corresponding to the at least one remaining delay budget, wherein the logical channel identifier field indicate one of the plurality of buffer size fields and one of the plurality of delay fields are available.

15. A user equipment (170), **characterised in that**, comprising:
a transceiver (173); and
a processor (172), coupled to the transceiver (173) and configured to:
receive, via the transceiver (173), a radio resource control configuration, wherein the radio resource control configuration indicates the user equipment (170) to report remaining delay budget information of a logical channel (70, 75, 130, 135) or a logical channel group through a status report message;
determine whether a triggering condition is met, wherein the triggering condition is associated with a threshold of remaining delay budget, wherein the threshold of remaining delay budget is configured by the radio resource control configuration; and
in response to the triggering condition being met, transmit, via the transceiver (173), the status report message including the remaining delay budget information, wherein the remaining delay budget information indicates at least one remaining delay budget and at least one associated buffer size.
